(19) Europäisches Patentamt

European Patent Office

Office européen des brevets

(11) **EP 1 005 714 B1**

(12) **FASCICULE DE BREVET EUROPEEN**

(45) Date de publication et mention de la délivrance du brevet:
**15.10.2003 Bulletin 2003/42**

(21) Numéro de dépôt: **98941518.7**

(22) Date de dépôt: **31.07.1998**

(51) Int Cl.$^7$: **H02K 33/16**

(86) Numéro de dépôt international:
**PCT/FR98/01718**

(87) Numéro de publication internationale:
**WO 99/010969 (04.03.1999 Gazette 1999/09)**

(54) **ACTIONNEUR ELECTROMAGNETIQUE A DEUX PIECES MOBILES EN OPPOSITION DE PHASES**

ELEKTROMAGNETISCHER ANTRIEB MIT ZWEI GEGENPHASIGEN MOBILEN TEILEN

ELECTROMAGNETIC ACTUATOR WITH TWO MOBILE PARTS IN PHASE OPPOSITION

(84) Etats contractants désignés:
**CH DE ES FR GB IT LI**

(30) Priorité: **22.08.1997 FR 9710585**

(43) Date de publication de la demande:
**07.06.2000 Bulletin 2000/23**

(73) Titulaire: **MMT S.A.**
**1700 Fribourg (CH)**

(72) Inventeurs:
• **OUDET, Claude**
**F-25000 Besançon (FR)**

• **FRACHON, Didier**
**F-25000 Besançon (FR)**

(74) Mandataire: **Breese, Pierre**
**Breese - Majerowicz - Simonnot**
**3, avenue de l'Opéra**
**75001 Paris (FR)**

(56) Documents cités:
**EP-A- 0 228 055**     **WO-A-97/29534**
**US-A- 5 208 498**

Printed by Jouve, 75001 PARIS (FR)

## Description

La présente invention concerne le domaine des actionneurs électromagnétiques produisant un mouvement alternatif. De tels actionneurs comportent de façon connue un pôle central et deux pôles latéraux. Le pôle central supporte une bobine d'excitation, ainsi qu'une partie mobile munie d'aimants permanents minces aimantés selon la direction de' l'entrefer. Le brevet allemand DE2603681 décrit un tel actionneur. Cet actionneur comporte une bobine fixe générant un flux alternatif et deux aimants mobiles se déplaçant en sens opposés. Les phénomènes électromagnétiques mis en oeuvre répondent à la loi de Laplace (flux dû aux aimants traversant la bobine). Les aimants ne sont pas des paires d'aimants minces accolés en sens opposés, mais deux barreaux magnétiques interagissant chacun avec le flux magnétique créé par la bobine.

Un tel actionneur de l'art antérieur présente des inconvénients majeurs : la structure répondant à la loi de Laplace ne permet pas de garantir la linéarité de la loi force/courant alimentant la bobine. Par ailleurs, le rendement, à savoir la force par Watt appliquée, de tels actionneurs, est faible. L'absence de linéarité se traduit par une irrégularité du fonctionnement, et par la nécessité de prévoir une électronique d'asservissement complexe pour pallier à des tels défauts de linéarité.

Une solution a ce problème général a été apportée par la déposante par le brevet européen EP93910083.0 décrivant un actionneur présentant trois pôles statoriques et une seule bobine entourant le pôle central. Cette solution consiste à mettre en oeuvre une structure électromagnétique fondamentalement différente, ne répondant pas à la loi de LAPLACE. La structure proposée comporte deux paires d'aimants minces accolés en sens alternés, se déplaçant dans un entrefer.

Il est apparu avec les dispositifs de l'art antérieur que la fréquence de vibration de l'organe mobile est limitée. Dès que la fréquence augmente, la force délivrée par rapport à la puissance électrique dissipée se dégrade et limite les performances de l'actionneur réalisé en application du brevet EP93910083.0. Le but de l'invention est de reculer les limites de fréquences de vibration en proposant une structure permettant d'augmenter le rendement électromagnétique.

A cet effet, l'invention concerne dans son acception la plus générale un actionneur électromagnétique comportant un stator fixe présentant deux pôles, ledit stator comportant au moins une bobine d'excitation alimentant les deux pôles, l'actionneur comportant en outre une partie mobile composée d'au moins deux éléments indépendants mobiles chacun selon des directions parallèles à l'intersection du plan de l'entrefer et du plan médian du stator fixe, en sens opposés, chacun des éléments mobiles étant muni d'aimants permanents minces aimantés transversalement, selon la direction de l'entrefer, caractérisé en ce que chacun des éléments mobiles présente trois aimants minces aimantés en sens alternés, solidaires ou non d'une culasse en matériau doux, lesdits aimants minces d'un desdits éléments mobiles étant aimantés selon le sens opposé aux aimants minces correspondant du second élément mobile, la culasse définissant avec la pièce statorique fixe l'entrefer de largeur E.

Avantageusement, l'organe mobile est constitué de deux pièces mobiles en opposition, chacune desdites pièces mobiles étant reliée au stator fixe par des moyens élastiquement déformables pour autoriser un débattement selon la direction de mobilité tout en maintenant un entrefer E sensiblement constant.

Selon un mode de réalisation préféré, la liaison entre chacune des pièces mobiles et le stator fixe est assurée par des lames-ressort s'étendant sensiblement perpendiculairement au plan de l'entrefer.

Selon une autre variante, la longueur Xc des pôles statoriques est supérieure ou égale à la course X de l'organe mobile augmentée d'une longueur sensiblement égale à E.

De préférence, la distance e séparant le pôle central et chacun des pôles latéraux est supérieure ou égale à 0.5 E où E désigne la largeur de l'entrefer.

Selon une réalisation avantageuse, l'actionneur possède un force de verrouillage qui tend à ramener la pièce mobile en position centrale.

Selon un mode de réalisation préféré, chacun des éléments mobiles est constitué d'une culasse mobile solidaire des trois aimants permanents aimantés transversalement, en sens alternés.

De préférence, la longueur cumulée des trois aimants d'un élément mobile est supérieur à la longueur de la culasse dudit élément mobile.

L'invention sera mieux comprise à la lecture de la description qui suit, se référant aux dessins annexés où :

- les figures 1 et 1' représentent des vues schématiques de deux variantes de réalisation de l'invention.

- la figure 2 représente une vue selon un plan de coupe transversal de l'un des éléments mobiles ;

- la figure 3 représente la courbe d'évolution de la force de rappel en fonction de la longueur des aimants latéraux ;

- les figures 4 et 4' représentent des vues en perspective de deux variantes de réalisation d'actionneurs de géométrie cylindrique selon l'invention ;

- la figure 5 représente une variante de réalisation de la partie mobile d'un actionneur selon l'invention ;

- les figures 6 et 6' représentent les courbes force / position respectivement avec et sans courant ;

- les figures 7 et 7' représentent des vues en perspective de deux variantes de réalisation d'actionneurs de géométrie tubulaire selon l'invention ;

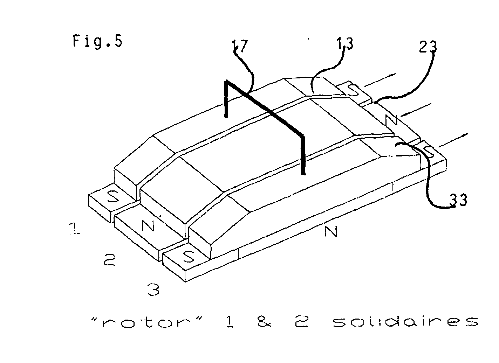

- la figure 5 représente une variante de réalisation de la partie mobile d'un actionneur selon l'invention ;

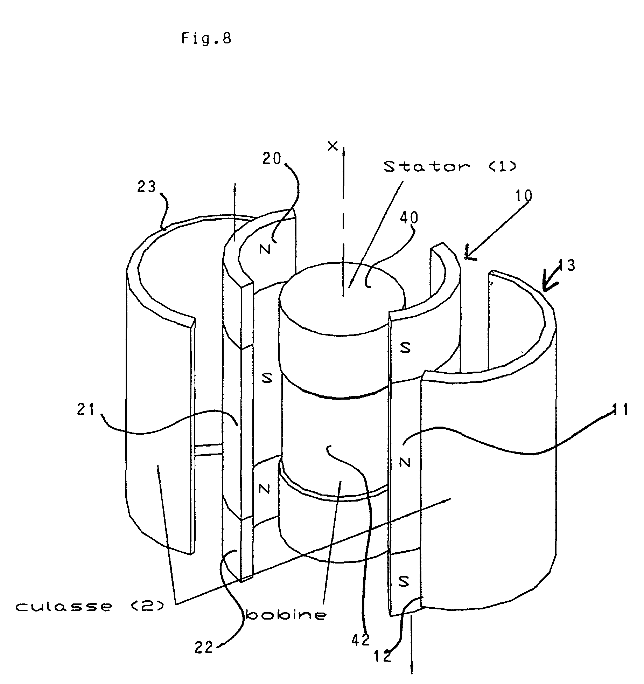

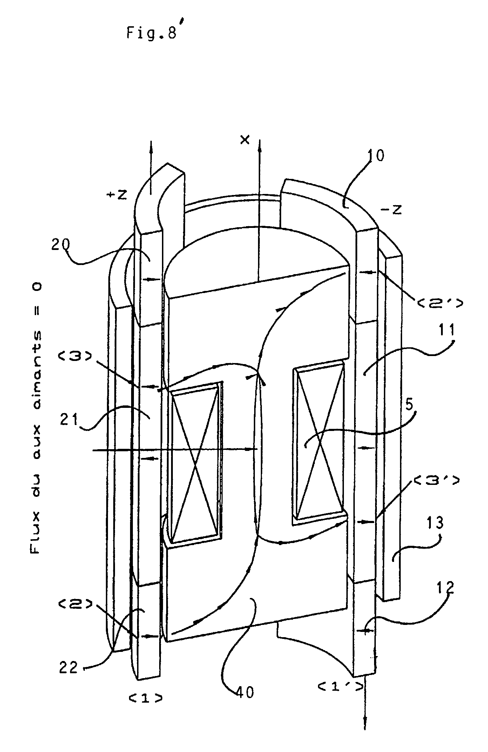

- les figures 8 et 8' représentent des vues en éclatés de deux variantes de réalisation d'actionneurs de géométrie tubulaire selon l'invention ;

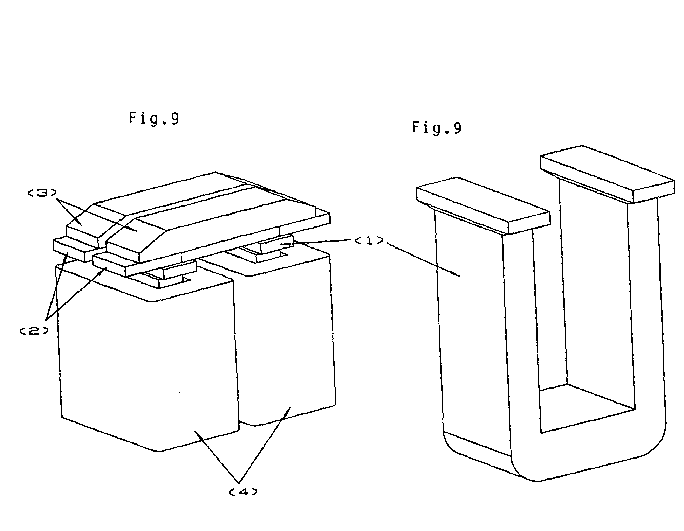

- les figures 9 et 9' représentent des vues en en perspective respective d'une variante de réalisation d'un actionneur à déplacement linéaire selon l'invention et de son stator.

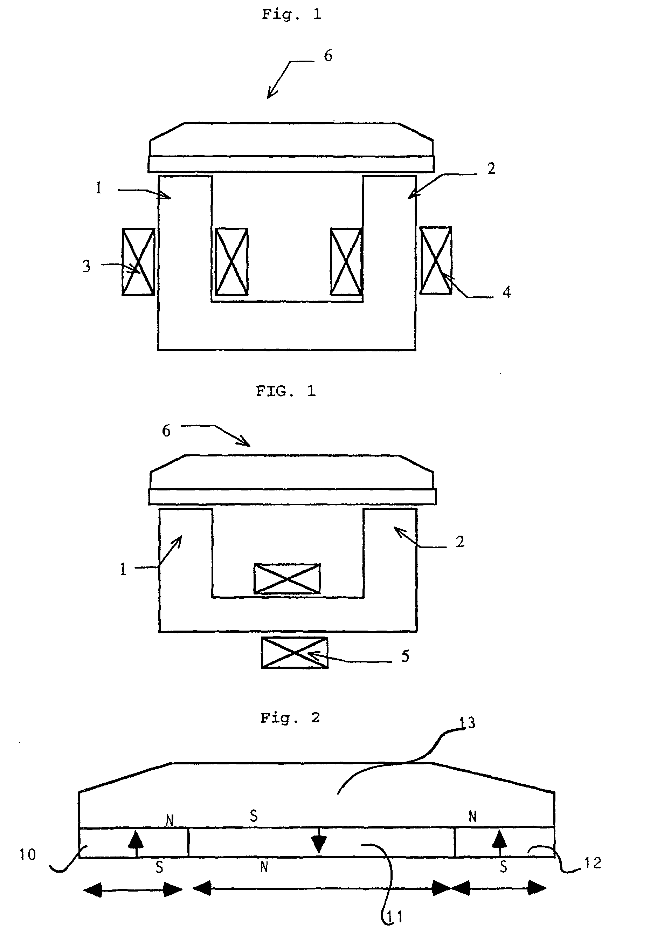

L'invention sera décrite en référence tout d'abord aux figures 1 et 1' représentant des vues schématiques de deux variantes de réalisation de l'invention. La présente invention concerne un actionneur électromagnétique comportant deux pôles statoriques (1, 2). Cet actionneur se compose de deux pôles statoriques supportant soit chacun une bobine d'excitation (3, 4) dans la variante représentée en référence à la figure 1, ou un seul bobinage (5) alimentant les deux pôles dans l'exemple de réalisation représenté en référence à la figure 1'. Les actionneurs selon l'invention comporte également une partie mobile (6) munie d'aimants permanents minces aimantés selon la direction de l'entrefer.

Le but de l'invention est de réaliser un actionneur de faible encombrement performant et fiable pour des applications nécessitant un déplacement alternatif, de fréquence élevée, ayant une force de détente magnétostatique de même signe que la force de rappel de la suspension.

La figure 2 représente une vue selon un plan de coupe transversal de l'un des éléments mobiles.

L'organe mobile de l'actionneur selon l'invention est composé d'au moins deux pièces indépendantes mobiles selon une direction parallèle à l'intersection du plan de l'entrefer et du plan médian de la pièce statorique fixe, en sens opposés. Chacune des pièces mobiles présente trois aimants minces (10, 11, 12) aimantés en sens alternés, transversalement. Dans l'exemple décrit en référence à la figure 2, les aimants (10 à 12) sont solidaires d'une culasse (13) en matériau doux. Les aimants minces (10 à 12) de chacun des éléments mobiles sont aimantés selon le sens opposé à celui des aimants minces correspondant de l'élément mobile adjacent, les culasses définissant avec la pièce statorique fixe l'entrefer E.

En position centrale, les transitions entre les trois aimants (10 à 12) d'une des parties mobiles sont alignées avec les pôles du stator. $L_{a2}$ est donc égale à . la distance entre les pôles statoriques plus la largeur d'un des pôles $X_c$.

La longueur $L_{a1}$ permet d'optimiser la force générée par un tel actionneur tout en limitant le volume d'aimants. La longueur Xc du pôle statorique central est supérieure ou égale à la course X de l'organe mobile augmentée d'une longueur sensiblement égale à E.

Afin d'augmenter le volume de cuivre sans augmenter les cotes extérieures de l'actionneur, les deux pôles (1, 2) statoriques se prolongent par une partie de section inférieure à leur propre section. Les sections des parties ainsi formées sont déterminées de façon à permettre le passage du flux magnétique en régime nominal sans saturation.

De préférence, l'organe mobile (6) est constitué de deux éléments mobiles vibrant en opposition (annulation de la quantité de mouvement totale), chacun desdits éléments mobiles étant relié à la partie statorique fixe par des moyens déformables pour autoriser un débattement selon la direction de mobilité tout en maintenant un entrefer E sensiblement constant. Afin d'annuler le couple créé par le déplacement en sens opposé des deux rotors, l'utilisation de deux demi-rotors et d'un rotor complet permet d'annuler la composante totale du couple, tel que décrit en figure 5.

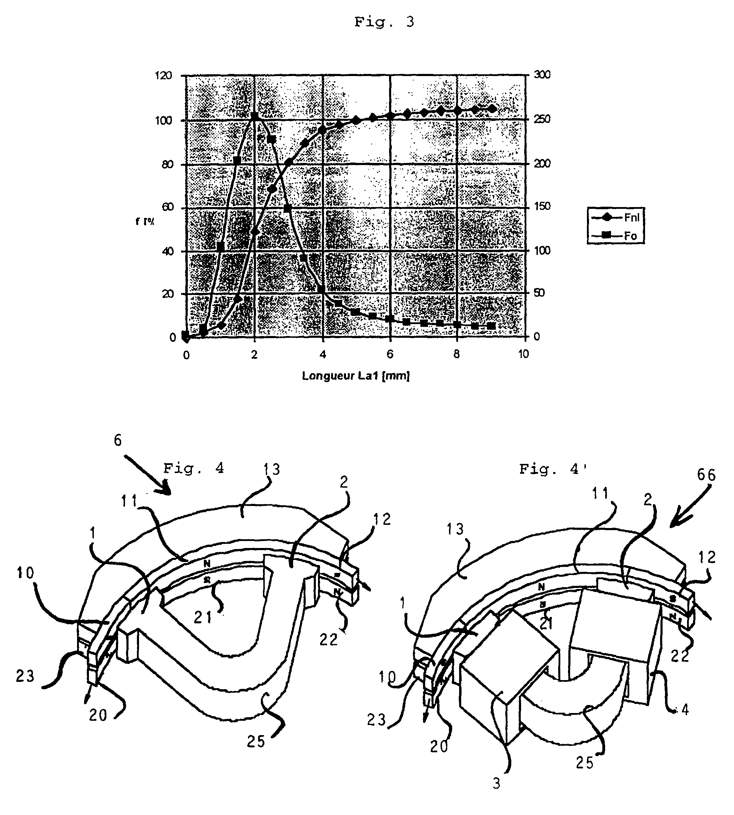

La figure 3 représente la courbe d'évolution de la force de rappel en fonction de la longueur $L_{a1}$ des aimants latéraux (10, 12). Cette courbe représente le pourcentage d'augmentation de la force du au courant Fni en fonction de la longueur La1 de l'aimant par rapport à la force générée par un aimant unipolaire de longueur La2 (pour La2 = 9 mm).

Comme le montre la Figure 3, pour un courant donné, la force créée augmente très rapidement avec l'augmentation de $L_{a1}$, justifiant un dépassement d'aimant qui, dans le but de minimiser le volume d'aimant et donc les coûts, ne doit pas être nécessairement le plus grand possible car la force tend également rapidement vers une limite. La Figure 3 montre aussi l'évolution de la force de rappel F0(force sans courant), qui tend à ramener le rotor en position centrale.

Pour un actionneur selon l'invention, la force générée est égale à :

$$F = 2*2B_r\frac{L}{E}ZnI \qquad \text{Variante de la Figure 1}$$

$$F = 2B_r\frac{L}{E}ZnI \qquad \text{Variante de la Figure 1'}$$

où Br est la rémanence de l'aimant, L son épaisseur, Z la largeur de l'aimant, E l'entrefer comprenant l'aimant et nI le courant dans la ou les bobines.

Le déplacement des éléments mobiles est en principe linéaire. Cependant l'actionneur selon l'invention peut également être réalisé sous une forme cylindrique. Le déplacement des pièces mobiles effectue dans ce cas selon des arcs de cercles inscrits sur un cylindre coaxial avec l'entrefer de forme cylindrique dans ce mode de réalisation.

Les figures 4 et 4' représentent des vues en perspective de deux variantes de réalisation d'actionneurs de géométrie cylindrique selon l'invention.

Les variantes diffèrent simplement par le nombre de bobines, à savoir une seule bobine pour la variante représentée en référence à la figure 4 et deux bobines pour la variante représentée en référence à la figure 4'.

Dans ce mode de réalisation à géométrie cylindrique, la partie mobile (6) est composée de deux éléments mobiles se déplaçant en rotation en sens opposés. Chacun des éléments mobile est formé par une culasse (13, 23) en arc de cercle sur laquelle sont fixés les aimants minces respectivement (10, 11, 12) et (20, 21, 22). Ces aimants sont également en forme d'arc de cercle. L'aimantation est orientée radialement, et alterne à la fois pour les aimants (10 à 12) fixés sur une même culasse (13), et pour deux aimants adjacents (10, 20) ou (11, 21) ou (12, 22) fixés sur deux culasses (13, 23) adjacentes.

Le stator présente deux branches formant des pôles statoriques (1, 2) réunis par une branche recourbée (25).

Les aimants latéraux (10, 20) et (12, 22) débordent des culasses (13, 23). La longueur cumulée des aimants (10 à 12) fixés sur une même culasse dépasse la longueur de ladite culasse (13).

La figure 5 représente une variante de réalisation de la partie mobile d'un actionneur selon l'invention. Dans cette variante, la partie mobile est constituée de trois pièces mobiles (13, 23, 33) réalisées en trois parties afin d'annuler le couple de torsion parasite. Les deux pièces mobiles externes (13, 33) sont couplées mécaniquement. La largeur de l'élément mobile central (23) est égale à la somme des largeurs des éléments mobiles latéraux. Avantageusement, la liaison entre chacun des éléments mobiles et la partie statorique fixe est assurée par des lames-ressorts s'étendant sensiblement perpendiculairement au plan de l'entrefer.

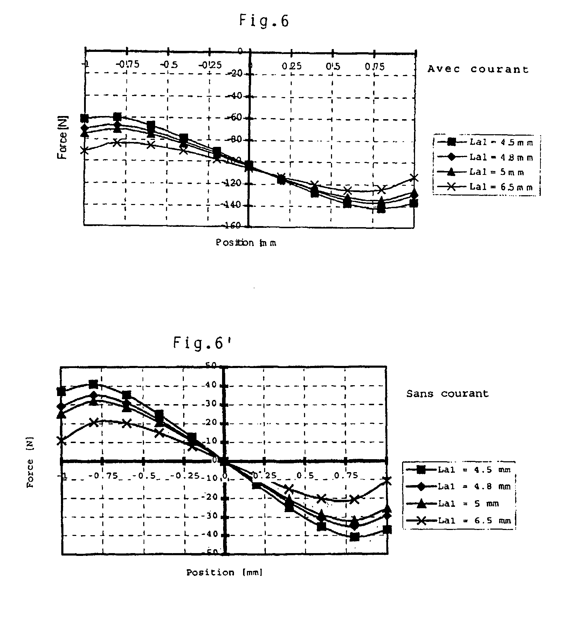

Les figures 6 et 6' représentent les courbes force / position respectivement avec et sans courant. Les deux types d'actionneurs présentent une force magnétostatique qui tend à ramener les pièces mobiles en position centrale. Cette force peut être utilisée pour compenser une partie de la raideur des lames, diminuant ainsi les contraintes. La Figure 6 représente la force produite par une tel actionneur én fonction de la position des éléments mobiles. La force est donnée pour un courant nl non nul et pour un courant nul (force magnétostatique). Sur la Figure 6 et 6' sont représentées les deux forces (respectivement avec et sans courant) pour plusieurs longueurs d'aimants La1.

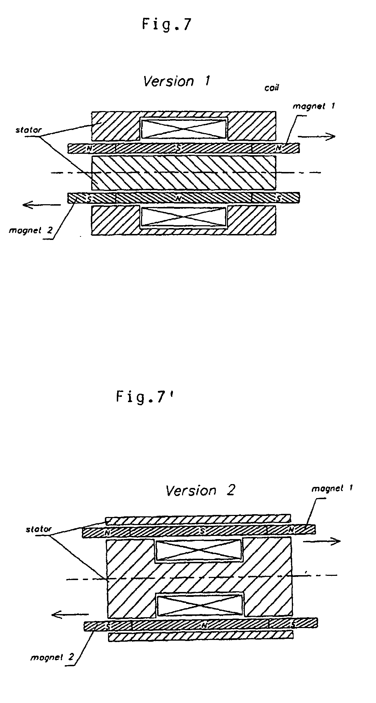

Les figures 7 et 7' représentent des vues en perspective de deux variantes de réalisation d'actionneurs de géométrie tubulaire selon l'invention. L'actionneur présente une symétrie axiale. Dans ce cas, la structure statorique (40) ainsi que le rotor sont de type cylindrique. Le rotor (41) est mobile soit en translation selon un axe Y correspondant à l'axe de courbure de la structure statorique cylindrique et du rotor.

Dans l'exemple se référant à la figure 7, le stator est une pièce tubulaire fer doux présentant un logement intérieur de forme annulaire dans lequel est placé la bobine d'excitation (5). Les deux extrémités (1, 2) forment les pôles statoriques.

Dans l'exemple se référant à la figure 7', le stator est une pièce en fer doux de forme cylindrique présentant un logement annulaire extérieur dans lequel est placé la bobine d'excitation (5). Les deux extrémités (1, 2) forment les pôles statoriques.

Les deux parties mobiles sont suspendues sur des lames ressort.

Les figures 8 et 8' représentent des vues en éclatés de deux variantes de réalisation d'actionneurs de géométrie tubulaire selon l'invention, correspondant à la vue en coupe constituant la figure 7.

Le stator (40) est formé par une pièce en fer doux cylindrique présentant à sa partie médiane (42) une section de plus faible section. La bobine est logée dans la cavité délimitée par cette partie de plus faible section.

Les structures aimantées sont formées de trois aimants en forme d'arc de cercle, aimantés radialement. L'aimant central (11, 21) est plus long que les deux aimants latéraux (10, 20 et 12, 22). Les structures aimantées vibrent en sens opposés. La culasse peut être formée d'une seule pièce (13) comme représentée en figure 8'. Dans ce cas, elle est fixe. La culasse de retour de flux est sur la figure 8' un tube non solidaire des aimants. Ces aimants minces sont aimantés en sens alternés, dans le sens de l'épaisseur. Les aimants sont de préférence du type à terres rares, tels les aimants en néodyme - fer - bore NdFeB à liant plastique de type isotrope.

Elle peut également être formée de deux pièces (13, 23) formant des demi-tubes. Dans ce cas, elles peuvent être chacune solidaire de l'une des structure aimantée, comme représenté sur la figure 8.

Les figures 9 et 9' représentent des vues en perspective respectivement d'une variante de réalisation d'un actionneur à déplacement linéaire selon l'invention et de son stator. Sur la Figure 8 et Figure 10 la longueur de la culasse n'est pas nécessairement égale à la longueur totale des pièces mobiles mais peut être inférieure à la longueur cumulée des trois aimants, et est égale à la longueur du stator dans l'exemple représenté sur la Figure 8.

Il convient de maintenir les pièces mobiles à une faible distance de la surface des pôles statoriques, et ce pour toute la course utile C. Cette fonction peut être assurée par une liaison déformable ou par une liaison élastique. Dans l'exemple décrit en référence, cette fonction est obtenue grâce à des lames-ressort travaillant en flexion alternée avec superposition d'un effort de traction lié à la valeur absolue moyenne de l'induction dans l'entrefer, constituées par des feuilles minces réalisées en acier à ressort tel que le Phynox (dénomination commerciale), s'étendant perpendiculairement au plan des aimants permanents.

La forme et l'épaisseur des lames-ressort sont déterminées de façon à maintenir les pièces mobiles à la bonne distance du stator, à supporter la contrainte due au déplacement, et à fixer éventuellement la fréquence de résonance de la pièce mobile. Pour mieux supporter la fatigue due à la flexion alternée, on peut disposer plusieurs lames en parallèle.

Sur la Figure 8, la deuxième pièce mobile est identique à la première pièce mobile à l'exception du fait que les aimants sont aimantés selon des sens opposés aux aimants adjacents de la première pièce mobile, lorsque toutes les deux sont en position de repos centrée par rapport au pôle statorique central.

Les deux pièces mobiles se déplacent en opposition, en raison du renversement des polarités des aimants.

Il est à noter que l'utilisation de deux pièces mobiles vibrant en opposition de phase permet de réduire le flux qui passe par les jambes du stator. Cela permet de réduire les pertes magnétiques et donc de réduire l'encombrement et la masse du stator, comme le montre la Figure 8', sur laquelle est représentée, pour un décalage de +Z et -Z respectivement de la pièce mobile (1) et de la pièce mobile (1'), le flux dû aux aimants dans l'actionneur de la Figure 8. Le flux qui traverse le noyau central du stator est dû au bout d'aimant (2) de longueur Z situé au bas de la pièce mobile (1) qui se referme sur le bout d'aimant (3), également de longueur Z mais d'aimantation opposée à (2). Nous avons de même pour la pièce mobile (1'), mais en raison des polarités inverses de (2) et (2') ainsi que de (3) et (3'), le flux traverse le noyau central du stator en sens inverse à celui créé par la pièce mobile (1), d'où, l'annulation du flux au centre du stator.

L'invention est décrite dans ce qui précède à titre d'exemple. Il est entendu que l'homme du métier est à même de réaliser différentes variantes de l'invention sans pour autant sortir du cadre des revendications ci-jointes.

**Revendications**

1. Actionneur électromagnétique comportant un stator fixe présentant deux pôles, ledit stator comportant au moins une bobine d'excitation (3, 4 ou 5) alimentant les deux pôles (1, 2), l'actionneur comportant en outre une partie mobile (6) composée d'au moins deux éléments indépendants mobiles chacun selon des directions parallèles à l'intersection du plan de l'entrefer et du plan médian du stator fixe, en sens opposés, chacun des éléments mobiles étant muni d'aimants permanents minces aimantés transversalement, selon la direction de l'entrefer, **caractérisé en ce que** chacun des éléments mobiles (6) présente trois aimants minces (10,11, 12) aimantés en sens alternés, solidaires ou non d'une culasse (13) en matériau doux, lesdits aimants minces d'un desdits éléments mobiles étant aimantés selon le sens opposé aux aimants minces (10,11, 12) correspondant du second élément mobile, la culasse (13) définissant avec la pièce statorique fixe l'entrefer de largeur E.

2. Actionneur électromagnétique selon la revendication 1 **caractérisé en ce que** l'organe mobile (6) est constitué de deux pièces mobiles en opposition, chacune desdites pièces mobiles étant reliée au stator fixe par des moyens élastiquement déformables pour autoriser un débattement selon la direction de mobilité tout en maintenant un entrefer E sensiblement constant.

3. Actionneur électromagnétique selon la revendication 2 **caractérisé en ce que** la liaison entre chacune des pièces mobiles et le stator fixe est assurée par des lames-ressort s'étendant sensiblement perpendiculairement au plan de l'entrefer.

4. Actionneur électromagnétique selon l'une quelconque des revendications précédentes **caractérisé en ce que** la longueur Xc des pôles statoriques (1, 2) sont supérieures ou égales à la course X de l'organe mobile (6) augmentée d'une longueur sensiblement égale à E, X, étant supérieur ou égal à Xc.

5. Actionneur électromagnétique selon l'une quelconque des revendications précédentes **caractérisé en ce que** la distance e séparant le pôle central (11) et chacun des pôles latéraux (10, 12) est supérieure ou égale à 0.5 E où E désigne la largeur de l'entrefer.

6. Actionneur électromagnétique selon l'une quelconque des revendications précédentes **caractérisé en ce qu'**il possède un force de verrouillage qui tend à ramener la pièce mobile (6) en position centrale.

7. Actionneur électromagnétique selon l'une quelconque des revendications précédentes **caractérisé en ce que** chacun des éléments mobiles est constitué d'une culasse mobile solidaire des trois aimants permanents (10,11, 12) aimantés transversalement, en sens alternés.

8. Actionneur électromagnétique selon la revendication 7 **caractérisé en ce que** la longueur cumulée des trois aimants (10,11, 12) d'un élément mobile (6) est supérieur à la longueur de la culasse (13) dudit élément mobile (6).

9. Actionneur électromagnétique selon l'une quelconque des revendications précédentes **caractérisé en ce que** la partie mobile (6) est constituée de trois. pièces mobiles (13, 23, 33) sont réalisées en trois parties afin d'annuler le couple résiduel. Les deux pièces mobiles externes (13, 33) sont couplées mécaniquement. La largeur de l'élément mobile central (23) est égale à la somme des largeurs des éléments mobiles latéraux.

**Patentansprüche**

1. Elektromagnetischer Betätiger mit einem festen Stator mit zwei Polen, wobei der besagte Stator mindestens eine die zwei Pole (1, 2) versorgende Erregerspule (3, 4 oder 5) aufweist, wobei der Betätiger ferner einen beweglichen Teil (6) aufweist, welcher aus mindestens zwei unabhängigen Teil besteht, welche jeweils in parallelen Richtungen zum Schnittpunkt der Eisenspaltebene und der Mittelebene des festen Stators in entgegengesetzter Richtung beweglich sind, wobei jedes der beweglichen Elemente mit dünnen, quer in der Richtung des Eisenspalts magnetisierten Dauermagneten versehen ist, **dadurch gekennzeichnet, dass** die beweglichen Elemente (6) drei dünne, in abwechselnden Sinnen magnetisierte Magnete (10, 11, 12) aufweist, welche mit einem Poljoch (13) aus weichem Stoff verbunden sein können oder auch nicht, wobei die besagten dünnen Magnete eines der besagten beweglichen Elemente im entgegengesetzten Sinne zu den dünnen Magneten (10, 11, 12), die dem zweiten, beweglichen Element entsprechen, magnetisiert sind, wobei das Poljoch (13) mit dem festen statarischen Teil den Eisenspalt mit einer Breite E bestimmt.

2. Elektromagnetischer Betätiger nach Anspruch 1, **dadurch gekennzeichnet, dass** das bewegliche Organ (6) aus zwei beweglichen, entgegengesetzten Teilen besteht, wobei jedes der besagten beweglichen Teile mit dem festen Stator durch elastisch verformbare Mittel verbunden ist, um eine Schwingung in der Bewegungsrichtung zu erlauben, während ein wesentlich gleichmäßiger Eisenspalt E beibehalten wird.

3. Elektromagnetischer Betätiger nach Anspruch 2, **dadurch gekennzeichnet, dass** die Verbindung zwischen jedem der beweglichen Teile und dem festen Stator durch Federblätter gewährleistet wird, welche sich wesentlich senkrecht zur Eisenspaltebene erstrecken.

4. Elektromagnetischer Betätiger nach einem der vorangehenden Ansprüche, **dadurch gekennzeichnet, dass** die Länge Xc der statarischen Pole (1, 2) größer als oder gleich dem Lauf X des beweglichen Organs (6) ist, durch eine Länge, welche wesentlich E, X entspricht, die größer als oder gleich Xc ist, erhöht.

5. Elektromagnetischer Betätiger nach einem der vorangehenden Ansprüche, **dadurch gekennzeichnet, dass** der Abstand e zwischen dem zentralen Pol (11) und jedem der seitlichen Pole (10, 12) größer als oder gleich 0,5 E ist, wobei E die Breite des Eisenspalts bezeichnet.

6. Elektromagnetischer Betätiger nach einem der vorangehenden Ansprüche, **dadurch gekennzeichnet, dass** er eine Verriegelungskraft besitzt, die dazu neigt, das bewegliche Teil (6) in die zentrale Stellung zurückzubringen.

7. Elektromagnetischer Betätiger nach einem der vorangehenden Ansprüche, **dadurch gekennzeichnet, dass** jedes der beweglichen Teile aus einem beweglichen Poljoch besteht, welches mit den drei quer, in abwechselnden Sinnen magnetisierten Dauermagneten (10, 11, 12) verbunden ist.

8. Elektromagnetischer Betätiger nach Anspruch 7, **dadurch gekennzeichnet, dass** die summierte Länge der drei Magnete (10, 11, 12) eines beweglichen Elements (6) größer ist als die Länge des Poljochs (13) des besagten beweglichen Elements (6).

9. Elektromagnetischer Betätiger nach einem der vorangehenden Ansprüche, **dadurch gekennzeichnet, dass** das bewegliche Teil (6) aus drei beweglichen Teilen (13, 23, 33) besteht, welche aus drei Teilen gebildet sind, um das Restmoment zu annullieren. Die beiden äußeren beweglichen Teile (13, 33) sind mechanisch gekuppelt. Die Breite des zentralen beweglichen Teils (23) entspricht der Summe der Breiten der seitlichen beweglichen Elemente.

**Claims**

1. Electromagnetic actuator comprising a fixed stator with two poles, the said stator comprising at least one moving coil (3, 4 or 5) supplying the two poles (1, 2), the actuator further comprising a moveable part (6) comprised of at least two independent moveable elements each along directions parallel to the intersection of the plane of the pole gap and of the median plane of the fixed stator, in opposite directions, each of the moveable elements being equipped with permanent thin magnets, magnetising crosswise, along the direction of the pole gap, **characterised in that** each of the moveable elements (6) has three thin magnets (10, 11, 12) magnetising in alternate directions, whether integral or not with the yoke (13) made of soft material, the said thin magnets of one of the said moveable elements being magnetised along the opposite direction to the thin magnets (10, 11, 12) corresponding to the second moveable element, the yoke (13) defining with the fixed statoric part the pole gap of width E.

2. Electromagnetic actuator according to claim 1, **characterised in that** the moveable element (6) is composed of two opposing moveable parts, each of the said moveable parts being linked to the fixed stator via elastically malleable mediums so as to allow for a displacement along the direction of movement whilst maintaining a substantially stable pole gap E.

3. Electromagnetic actuator according to claim 2, **characterised in that** the connection between each of the moveable parts and the fixed stator is ensured by spring blades extending substantially perpendicular to the plane of the pole gap.

4. Electromagnetic actuator according to any one of the previous claims, **characterised in that** the length Xc of the statoric poles (1, 2) is greater than or equal to the stroke X of the moveable element (6) increased by a length substantially equal to E, X being greater than or equal to Xc.

5. Electromagnetic actuator according to any one of the previous claims, **characterised in that** the distance E separating the central pole (11) and each of the lateral poles (10, 12) is greater than or equal to 0.5 E when E designates the width of the pole gap.

6. Electromagnetic actuator according to any one of the previous claims, **characterised in that** it has a locking pressure which attempts to restore the moveable part (6) to the central position.

7. Electromagnetic actuator according to any one of the previous claims, **characterised in that** each of the moveable elements comprises a moveable yoke integral to the three permanent magnets (10, 11, 12) magnetising crosswise, in alternate directions.

8. Electromagnetic actuator according to claim 7, **characterised in that** the cumulated length of the three magnets (10, 11, 12) of a moveable element (6) is greater than the length of the yoke (13) of the said moveable element (6).

9. Electromagnetic actuator according to any one of the previous claims, **characterised in that** the moveable part (6) comprises three moveable parts (13, 23, 33) which are made of three parts so as to eliminate the thread friction torque. The two external moveable parts (13, 33) are mechanically interlocked. The width of the central moveable element (23) is equal to the sum of the widths of the lateral moveable elements.

Fig. 1

6

FIG. 1

6

Fig. 2

13

N        S        N

S        N        S

10        11        12

Fig. 3

f l%

Longueur La1 [mm]

Fnl
Fo

6

Fig. 4

13

11

2

1

12

10

21

22

23

20

25

Fig. 4'

66

11

2

13

1

12

10

21

22

23

20

4

25

3

Fig.5

"rotor" 1 & 2 solidaires

## Fig.6

Avec courant

Legend:
- Lal = 4.5 mm
- Lal = 4.8 mm
- Lal = 5 mm
- Lal = 6.5 mm

Force [N]

Position in m

## Fig.6'

Sans courant

Legend:
- Lal = 4.5 mm
- Lal = 4.8 mm
- Lal = 5 mm
- Lal = 6.5 mm

Force [N]

Position [mm]

11

Fig.7

Version 1

coil

magnet 1

stator

magnet 2

Fig.7'

Version 2

magnet 1

stator

magnet 2

Fig.8

Stator (1)

culasse (2)

bobine

Fig.8′

Flux du aux aimants = 0

Fig.9

Fig.9